# EUROPEAN PATENT SPECIFICATION

(11) **EP 0 592 559 B1**
(45) Date of publication and mention of the grant of the patent: **08.10.1997**
(21) Application number: 92914898.9
(22) Date of filing: 30.06.1992
(51) Int. Cl.: F16L 37/14

(54) **CONNECTION AND CONTROL DEVICE FOR FLUID MACHINES**
SCHALTUNG UND STEUERVORRICHTUNG FÜR FLUIDMASCHINEN
DISPOSITIF DE BRANCHEMENT ET DE REGULATION POUR DES MACHINES HYDRAULIQUES

(30) Priority: 01.07.1991 US 723770; 13.12.1991 US 809109
(43) Date of publication of application: 20.04.1994
(73) Proprietor: INGERSOLL-RAND COMPANY, Woodcliff Lake New Jersey 07675-8738 (US)
(72) Inventor: GEIGER, Robert, E., Sayre, PA 18840 (US); CLAPP, John, M., Sayre, PA 18840 (US)
(74) Representative: Feakins, Graham Allan
(86) International application number: PCT/US92/05597
(87) International publication number: WO 93/01443

(56) References cited:
- GB-A- 732 186
- GB-A- 1 145 667
- GB-A- 1 266 535
- GB-A- 2 072 792
- GB-A- 2 166 827
- US-A- 3 314 696
- US-A- 3 973 791
- US-A- 4 244 608
- US-A- 4 729 436

## Description

This invention relates to a pressure fluid operated machine having a pressure fluid connection device in a fluid channel of the machine to permit assembly of a flexible hose to the machine.

Fluid machines commonly require connection to fluid inlet and/or fluid outlet lines. Such connections are usually accomplished by use of threaded adapters or bayonet style quick connectors. In either case, an adapter of some sort is threaded into the fluid machine while a mating adapter is attached to the appropriate fluid carrying hose or other conduit.

Where mobility is required, as in the case of fluid powered hand held tools, or in cases where the connection point to the fluid machine is fragile, use of threaded adapters may not be desirable. Such adapters usually extend a significant distance from the attachment point and, consequently, may seriously impair mobility or may even lead to fractures of the fluid machine housing at the attachment point. Consequently, when a fluid machine is made from a thin material or low strength material, the housing will be subject to damage from bumping the adapter or from overtightening of the threaded adapter within the housing fluid channel. Thus, damage to the fluid machine housing at the connection point may be caused by inadvertent physical impact during use or by routine assembly and disassembly.

GB-A-2 166 827 describes a connection for hoses comprising a female part 2 having a fluid conveying bore 3 and provided with at least one recess 4 of circular cross section adapted to receive at least partially a male part 5 having a through bore 13 and intended to make fluid connection with bore 3 of the female part 2. A generally U-shaped removable staple retains female and male parts 2 and 5 together.

US 3,973,791 describes a safety coupling device having male and female coupling 12 and 14, ceiling means 16, a retaining means 18 and a connection means 20 which serves to interconnect the male coupling member to a conventional hydraulic hose or conduit 22, in accordance with the preamble to claim 1, c.f. the above possible disadvantage.

According to the present invention, there is provided a pressure fluid operated machine having a pressure fluid connection device in a fluid channel of the machine to permit assembly of a flexible hose to the machine, the machine being of the type having an elongate radially symmetrical body having first and second ends and a central fluid passage therebetween, a means at the first end for attachment of said body to a flexible hose, a means at the second end of said body for providing a circumferential fluid tight seal between said body and said channel, and non-threaded retaining means provided on said body intermediate of said first and second ends for retaining said body within said channel; characterised in that said body is completely contained within said channel, and the connection between said attachment means and said hose is completely within the confines of said channel.

For a better understanding of the invention, and to show how the same may be carried into effect, reference will now be made, by way of example, to the accompanying drawings, in which:-
Figure 1 is a diagrammatic sectional view of a fluid connection device for assembly between a flexible hose and a fluid channel bore,
Figure 2 is a diagrammatic sectional view of a preferred embodiment of fluid connection device,
Figure 3 is a view similar to Figure 2 of another embodiment,
Figure 4 is a view similar to Figure 2 of another embodiment, and
Figure 5 is a sectional view of the fluid connection device applied to an outlet of a fluid machine.

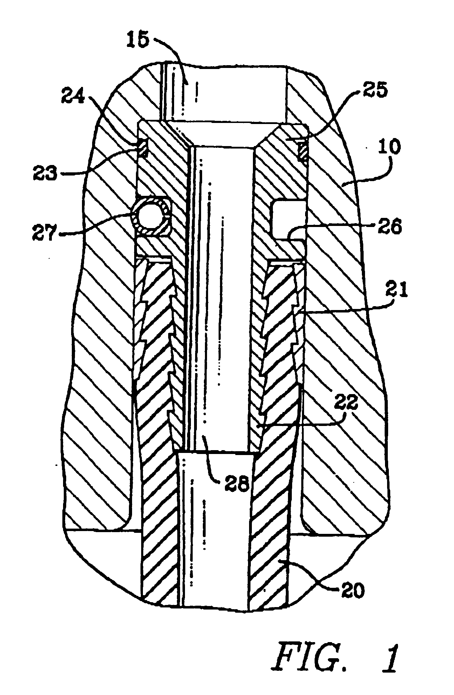

Referring to Figure 1, the fluid connection device is shown in a fluid machine housing 10 which has a fluid channel 15 through which fluid flows either into or out of the fluid machine. The device has a radially symmetrical body 25 with a central axial fluid passage 28 connecting a barbed nipple 22 at a first end to a sealing arrangement with the fluid channel 15 at a second end. A circumferential seal ring groove 24 on the body 25 provides retention and support for a seal ring 23 which provides a fluid tight seal between the outer circumference of the body 25 and the inner wall of the fluid channel 15. To capture the body 25 within the fluid channel 15 of the housing 10, a retaining pin groove 26 is provided at an intermediate portion of the circumference of body 25. The housing 10 has a retaining pin bore transverse to and tangential with the fluid channel 15. Alignment of the retaining pin groove 26 with the retaining pin bore permits insertion of a retaining pin 27 which captures the body 25 within the fluid channel 15.

In use, a compression sleeve 21 is slipped over the end of a flexible hose 20 and the hose is pushed onto the barbed nipple 22 of the body 25. The compression sleeve 21 is squeezed about the body 25 and the hose/fitting body assembly is inserted into the channel 15 of the machine housing 10. The retaining pin 27 is inserted into the retaining pin bore in the housing 10 through the retaining pin groove 26 to capture the assembly within the channel 15. Note that the compression sleeve 21 may be provided as a split ring which is placed over the hose 20 and is radially compressed when the assembly is inserted into the channel 15. It may also be formed from metal as a cupped eyelet which is slipped over the hose 20 and permanently crimped about the hose to capture it on the barbed nipple 22 of the body 25. Some new types of hoses do not require a compression sleeve for retention on the nipple.

It can be seen that the connection nipple 22 is completely within fluid channel 15. Thus, the hose 20 is free to flex directly against the housing 10. This can provide critical clearance for manoeuvring of the fluid machine in restricted spaces. Moreover, it can be seen that there is no stress concentration introduced by this connection device due to its compliant sealing arrangement and its simplified low stress retention provision.

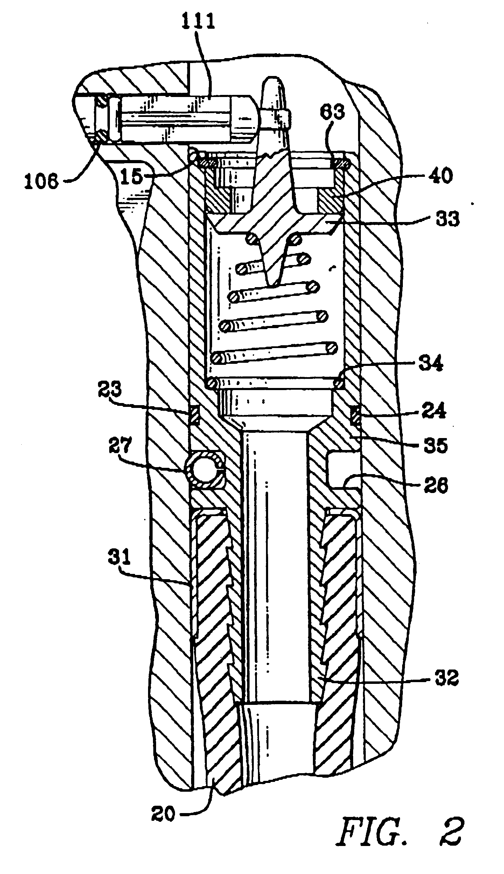

A combined fluid connection and control device is shown in Figure 2. Since this arrangement provides fluid shutoff even when the fitting body is removed from the housing, it is the preferred embodiment. Here, the radially symmetrical fitting body 35 incorporates all the features of the body 25 described with reference to Figure 1. In addition, at its second end, the body 35 incorporates a valve seat 40 which is held in place by a valve seat retainer 63. A valve element 33, shown here as a common tilt valve, occludes the fluid passage through the valve seat 40. A valve spring 34 biasses the valve element 33 against the seat 40. The fitting body 35 is virtually identical to the fitting body 25 shown in Figure 1 insofar as the fluid connection feature is concerned. Note that the barbed nipple 32 of Figure 2 is functionally identical to the barbed nipple 22 of Figure 1. The retainer 27 and groove 26 as well as seal ring 23 and groove 24 are again functionally identical to their counterparts in Figure 1. The compression sleeve 31 is shown as the cupped eyelet version which was discussed earlier. This is the version which requires crimping with a special tool in order to lock the hose 20 on the barbed nipple 32. The view presented in this figure approximates the arrangement that would be seen in the pistol grip handle of a power tool.

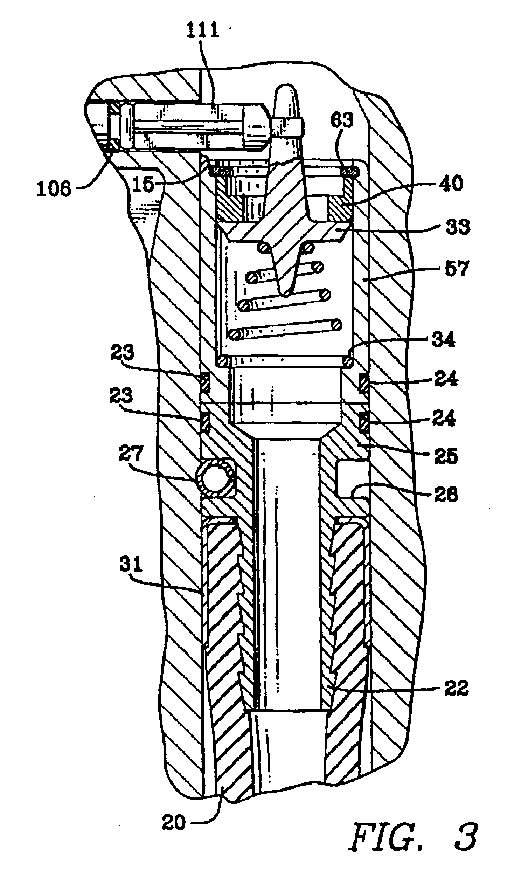

Figure 3 shows the features of an alternative embodiment to that of Figure 2 which provides all the features thereof.

With the exception of the compression sleeve 31 the fluid connection portion shown in Figure 3 is identical to that of Figure 2. The fluid control function is provided by a modular valve assembly which is held in the channel 15 by the body 25. The control valve assembly includes fitting body 57, valve seat 40, valve element 33, biassing spring 34, valve seat retainer 63 and seal ring 23 in seal ring groove 24.

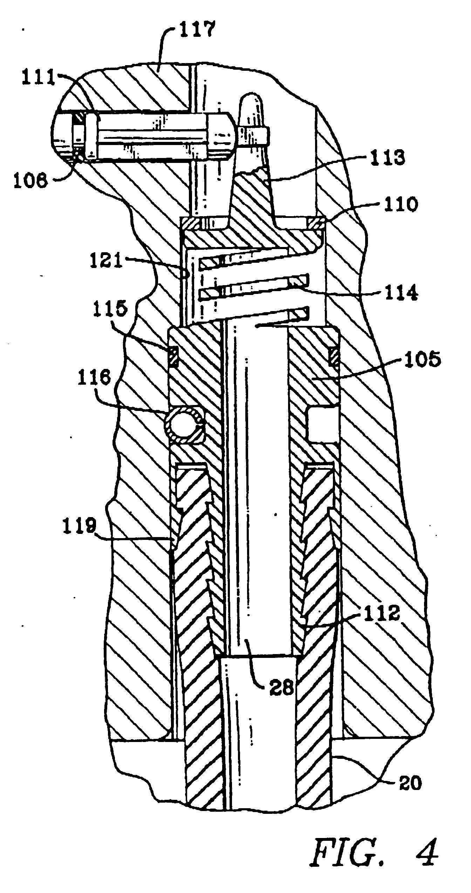

Figure 4 shows another embodiment of the fluid connection and control device. This time, the valve seat is provided as part of the housing 117. In this case, a one piece connection and control assembly is moulded or otherwise formed. It consists of a fitting body 101 having a barbed nipple 112 for receiving the flexible hose 20. Spaced outwardly from the barbed nipple 112 are hose retention fingers 119 which perform the function of the compression sleeves in this embodiment. A retention pin 116 and seal ring 115 are functionally identical to the counterpart items previously described. A valve element 113 is biased against valve seat 110 by valve spring 114. The valve seat 110 is fitted within inlet fluid channel 121 of the housing 117. The valve element 113 is moved by a valve actuator 111 which protrudes through the housing 117 into the channel 121. Leakage from the channel 121 along the valve actuator 111 is prevented by an actuator seal ring 106. Although this embodiment is difficult to make, it does provide an assembly which requires only a minimum number of parts.

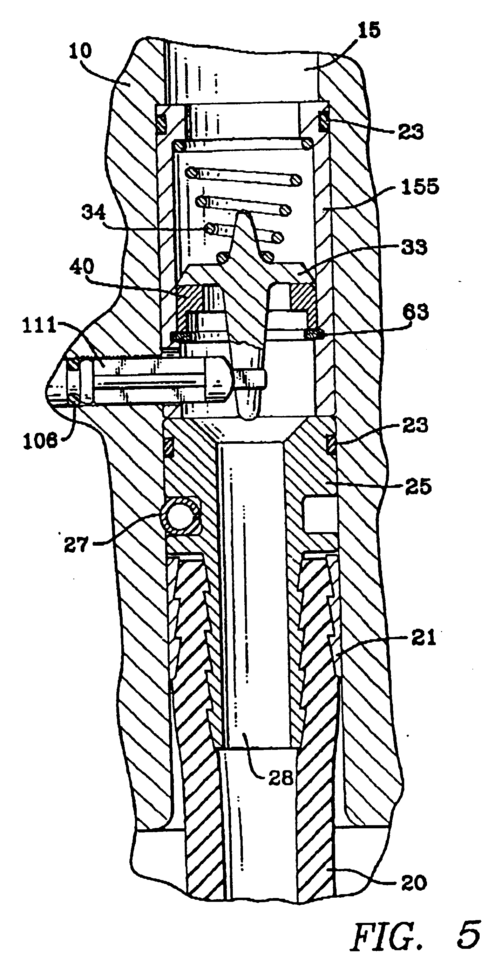

Figure 5 shows the fluid connection and control device as it would be applied to the outlet of a fluid machine. It is similar to the embodiment shown in Figure 3 with the exception that the fluid control module in this case is reversed so as to provide fluid control valving for an outward flow of fluid. The housing 10 has a fluid channel 15 in which a fluid control body 155 is fitted to form a seal with the channel by means of seal ring 23. The valve seat 40 is held within control body 155 by valve seat retainer 63. Valve element 33 is biassed against valve seat 40 by valve spring 34. Actuator 111 protrudes through housing 10 into fluid channel 15 where it can act upon valve element 33 to control fluid flow through the valve. Actuator seal ring 16 prevents leakage around actuator 111 through housing 10. The fluid connection portion of this embodiment is precisely the same as that described in Figure 1.

## Claims

1. A pressure fluid operated machine having a pressure fluid connection device in a fluid channel (15) of the machine to permit assembly of a flexible hose (20) to the machine, the machine (10) being of the type having an elongate radially symmetrical body (25) having first and second ends and a central fluid passage (28) therebetween, a means (22) at the first end for attachment of said body to a flexible hose (20), a means (23) at the second end of said body (25) for providing a circumferential fluid tight seal between said body and said channel (15), and non-threaded retaining means (27) provided on said body intermediate of said first and second ends for retaining said body within said channel; characterised in that said body (25) is completely contained within said channel, and the connection between said attachment means (22) and said hose (20) is completely within the confines of said channel.

2. A machine according to claim 1, wherein said means (27) for retaining said body in said channel comprises an external circumferential recess (26) on said body, a transverse bore tangentially intersecting said fluid channel, and an elongate member (27) extending through said transverse bore and said circumferential recess (26).

3. A machine according to claim 1 or 2 and further comprising means at said second end of said body for selectively permitting or preventing flow of fluid therethrough.

4. A machine according to claim 3, wherein said means for selectively permitting or preventing flow of fluid comprises a valve seat (40) within said fluid passage, a valve element (33) biassed against said valve seat to prevent flow of fluid therethrough and means (111) for selectively displacing said valve element away from said valve seat to permit flow of fluid therethrough.

5. A machine according to any one of the preceding claims, wherein the means for attachment to a flexible hose (20) comprises a barbed nipple (32) for insertion into an end of said hose and a compression sleeve (31) for retaining said hose on said barbed nipple.

6. A machine according to any one of the preceding claims, wherein said means for providing a fluid tight seal comprises at least one resilient seal ring (24) fitted in a corresponding external circumferential groove (23) of said body.

7. A machine according to any one of claims 1 to 5, wherein said means for providing a fluid tight seal comprises a smooth outer surface on the radially symmetrical body which acts against a resilient seal in said fluid channel.

## Patentansprüche

1. Druckfluidbetriebene Maschine mit einer Druckfluidverbindungsvorrichtung in einem Fluidkanal (15) der Maschine, um einen flexiblen Schlauch (20) an der Maschine anschließen zu können, wobei die Maschine (10) so gestaltet ist, daß sie einen länglichen, radial symmetrischen Körper (25) aufweist, der ein erstes und ein zweites Ende und einen dazwischen liegenden zentralen Fluiddurchgang (28) aufweist, mit einer Einrichtung (22) am ersten Ende zur Befestigung des Körpers mit einem flexiblen Schlauch (20), mit einer Einrichtung (23) am zweiten Ende des Körpers (25) zum Schaffen einer fluiddichten Umfangsdichtung zwischen dem Körper und dem Kanal (15), und mit einer nicht mit Gewinde versehenen Rückhalteeinrichtung (27), die auf dem Körper zwischen dem ersten und dem zweiten Ende vorgesehen ist, um den Körper innerhalb des Kanals zurückzuhalten, **dadurch gekennzeichnet**, daß der Körper (25) vollständig im Kanal enthalten ist, und daß die Verbindung zwischen der Befestigungseinrichtung (22) und dem Schlauch (20) sich vollständig innerhalb der Grenzen des Kanals befindet.

2. Maschine nach Anspruch 1, wobei die Einrichtung (27) zum Zurückhalten des Körpers im Kanal eine äußere Umfangsrille (26) am Körper aufweist, wobei eine Querbohrung den Fluidkanal tangential schneidet, und wobei ein längliches Bauteil (27) sich durch die Querbohrung und die Umfangsrille (26) erstreckt.

3. Maschine nach Anspruch 1 oder 2, mit einer Einrichtung am zweiten Ende des Körpers zum wahlweisen Zulassen oder Verhindern eines Fluidstroms hierdurch.

4. Maschine nach Anspruch 3, wobei die Einrichtung zum wahlweisen Zulassen oder Verhindern eines Fluidstroms einen Ventilsitz (40) innerhalb des Fluiddurchgangs, ein Ventilelement (33), das gegen den Ventilsitz vorgespannt ist, um einen Fluidstrom hierdurch zu verhindern und eine Einrichtung (111) zum wahlweisen Verschieben des Ventilelements weg von dem Ventilsitz, zum Zulassen eines Fluidstroms hierdurch aufweist.

5. Maschine nach einem der vorhergehenden Ansprüche, wobei die Einrichtung zum Befestigen an einem flexiblen Schlauch (20) einen mit Widerhaken versehenen Nippel (32) zum Einsatz in ein Ende des Schlauches und eine Druckbuchse (31) zum Zurückhalten des Schlauchs an dem mit Widerhaken versehenen Nippel aufweist.

6. Maschine nach einem der vorhergehenden Ansprüche, wobei die Einrichtung zum Schaffen einer fluiddichten Dichtung wenigstens einen elastischen Dichtung (24) aufweist, der in einer entsprechenden äußeren Umfangsnut (23) des Körpers montiert ist.

7. Maschine nach einem der Ansprüche 1 bis 5, wobei die Vorrichtung zum Schaffen einer fluiddichten Dichtung eine weiche äußere Oberfläche auf dem radial symmetrischen Körper aufweist, die gegen eine elastische Dichtung in dem Fluidkanal wirkt.

## Revendications

1. Machine commandée par un fluide sous pression ayant un dispositif de connexion d'un fluide sous pression dans un canal (15) de fluide de la machine afin qu'un tube souple (20) puisse être monté sur la machine, la machine (10) étant du type qui comporte un corps allongé symétrique radialement (25) ayant une première et une seconde extrémité et un passage central (28) de fluide entre les extrémités, un dispositif (22) placé à la première extrémité et destiné à fixer le corps au tube souple (20), un dispositif (23) placé à la seconde extrémité du corps (25) et destiné à former un joint circonférentiel étanche entre le corps et le canal (15), et un dispositif de retenue non fileté (27) placé sur le corps entre la première et la seconde extrémité afin qu'il retienne le corps dans le canal, caractérisée en ce que le corps (25) est totalement contenu à l'intérieur du canal, et la connexion entre le dispositif de fixation (22) et le tube souple (20) se trouve totalement dans les confins du canal.

2. Machine selon la revendication 1, dans laquelle le dispositif (27) de retenue du corps dans le canal comprend une cavité circonférentielle externe (26) formée sur le corps, un trou transversal recoupant tangentiellement le canal de fluide, et un organe allongé (27) passant dans le trou transversal et la cavité circonférentielle (26).

3. Machine selon la revendication 1 ou 2, comprenant en outre un dispositif placé à la seconde extrémité du corps et destiné à permettre ou empêcher sélectivement la circulation du fluide à l'intérieur.

4. Machine selon la revendication 3, dans laquelle le dispositif destiné à permettre ou empêcher sélectivement la circulation du fluide comporte un siège (40) de soupape placé dans le passage de fluide, un élément obturateur (33) rappelé contre le siège afin qu'il empêche la circulation du fluide à l'intérieur et un dispositif (111) destiné à déplacer sélectivement l'élément obturateur afin qu'il s'écarte du siège et permettre la circulation du fluide à l'intérieur.

5. Machine selon l'une quelconque des revendications précédentes, dans laquelle le dispositif de fixation à un tube souple (20), comporte un embout à barbillon (32) destiné à pénétrer à une extrémité du tube souple et un manchon de compression (31) destiné à retenir le tube souple sur l'embout à barbillon.

6. Machine selon l'une quelconque des revendications précédentes, dans laquelle le dispositif destiné à former un joint étanche au fluide comporte au moins une bague élastique d'étanchéité (24) montée dans une gorge circonférentielle externe correspondante (23) du corps.

7. Machine selon l'une quelconque des revendications 1 à 5, dans laquelle le dispositif destiné à former un joint étanche au fluide comporte une surface externe lisse formée sur le corps radialement symétrique et qui agit contre un joint élastique d'étanchéité placé dans le canal de fluide.
